(19) Europäisches Patentamt
European Patent Office
Office européen des brevets

(11) **EP 1 906 652 A2**

(12) **EUROPEAN PATENT APPLICATION**

(43) Date of publication:
**02.04.2008 Bulletin 2008/14**

(51) Int Cl.:
***H04N 5/21*** *(2006.01)*

(21) Application number: **07253827.5**

(22) Date of filing: **27.09.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK YU**<br><br>(30) Priority: **28.09.2006 GB 0619220** | (71) Applicant: **Tandberg Television ASA**<br>**0661 Oslo (NO)**<br><br>(72) Inventor: **Mitchell, Arthur**<br>**Winchester, Hampshire SO22 6JA (GB)**<br><br>(74) Representative: **Want, Clifford James**<br>**Harrison Goddard Foote**<br>**40-43 Chancery Lane**<br>**London WC2A 1JA (GB)** |

(54) **Image processing**

(57)     A programmable spatial filter system 30 for a video signal includes a position extraction block 33 arranged to extract a position in an image of a picture element to be spatially filtered. A programmable mask generator 34 receives output from the position extraction block and generates a selectable filter mask dependent on the extracted position. A programmable spatial filter 31 filters the image using the selected filter mask from the programmable mask generator 34.

30

**Figure 3**

Printed by Jouve, 75001 PARIS (FR)

**Description**

This invention relates to image processing and in particular to processing of image border portions for improved image compression performance, using a programmable spatial filter system.

It is well known that the human visual system (HVS) has a reduced sensitivity to spatial resolution toward a periphery of a field of vision of a human eye. This is due to a variation in a density of rods and cones across a retina.

Furthermore, many television receivers use glass cathode ray tubes (CRTs) to display an image using electron beam impingent upon a phosphor screen. It has long been the practice initially to set up these receivers to scan over the edge of the screen to minimize an effect of aging of circuitry of the display which causes a reduction in deflection of the beam.

Both these considerations have lead to a practice of quantizing the periphery of an image more coarsely, or harshly, than a central region during video compression for television transmission, since the peripheral portion of the image is rarely actually displayed to the viewer due to over scan, and in any case the viewer's resolution has less acuity at the periphery of the viewing field of vision.

However, this practice leads to blocking, a noticeable artifact readily detected by the HVS, not only in the region harshly quantized but also into the central region, because motion prediction for spatial redundancy uses parts of this periphery in predicting the central parts of the image.

Another factor affecting this practice is a gradual change from use of CRT displays towards use of alternative display technologies such as plasma and LCD displays. These displays allow a complete transmitted image to be viewed since the display matrix is of a fixed resolution and size and no reduction in beam deflection, and therefore scan size, occurs during a life of the display.

There is therefore a desire to gain advantage from properties of the HVS, while preventing harsh, unwanted artifacts on modem screens.

GB 0609154.0 discloses an image preprocessing stage in which a degree of filtering is linked to occupancy of an encoder output buffer, immediately prior to image compression. This linkage causes a reduction in spatial bandwidth as the buffer level rises in order to assist in keeping a system stable and within its operating margins.

In this former disclosure, a degree of filtering may vary across the image proportionally to a distance from a centre of a screen. However, preferably a central portion would benefit from no processing while the border portion can be filtered rather more harshly. In addition, no allowance for source image content is made which limits the success of the system in removing detail without introducing unwanted, noticeable artifacts.

It is an object of the present invention at least to ameliorate the aforesaid disadvantages in the prior art.

According to a first aspect of the invention, there is provided a programmable spatial filter system for a video signal comprising position extraction means arranged to extract a position in an image of a picture element to be spatially filtered; source image content detector means; programmable mask generator means arranged to receive output from the position extraction means and from the source image content detector means and to generate a filter mask dependent on the extracted position and on source image content in a border portion of the image; and programmable spatial filtering means arranged to filter the image using the filter mask input from the programmable mask generator means.

Conveniently, the programmable mask generation means further comprises user selection means arranged for a user to select a filter mask.

Advantageously, the filter mask is arranged to filter the image to a greater extent in border portions of an image than in a central portion of the image.

Advantageously, the filter mask is arranged to filter the image in a transition portion between the border portions and the central portion of the image to an extent decreasing from the border portions to the central portion.

Conveniently, a transition in a degree of filtering from the border portions to the central portion is non-linear.

Advantageously, the source image content detector means comprises graphics detector means arranged to detect whether the picture element comprises a graphics picture element and to output a first resultant signal to the programmable mask generator, wherein the programmable mask generator is arranged to modify generation of the filter mask dependent on the first resultant signal.

Advantageously, the source image content detector means comprises skin tone detector means arranged to detect whether the picture element comprises skin tones and to output a second resultant signal to the programmable mask generator, wherein the programmable mask generator is arranged to modify generation of the filter mask dependent on the second resultant signal.

According to a second aspect of the invention, there is provided a method of spatially filtering an image represented by a video signal comprising the steps of: inputting a picture element of the video signal; extracting a position of the picture element within the image; detecting source image content in a border portion of the image; generating a filter mask for spatially filtering picture elements of the image dependent on the position of the picture element within the image and on source image content in the border portion of the image; using the filter mask spatially to filter the image; and outputting a video signal representing the filtered image.

Conveniently, generating a filter mask further comprises a user selecting a filter mask.

Advantageously, the method comprises filtering an image to a greater extent in border portions of the image than in a central portion of the image.

Advantageously, the method comprises filtering the image in a transition portion between the border portions and the central portion of the image to an extent decreasing from the border portions to the central portion.

Conveniently, a transition in a degree of filtering from the border portions to the central portion is non-linear.

Advantageously, detecting source image content in a border portion of the image comprises detecting whether the picture element comprises a graphics picture element and outputting a first resultant signal to the programmable mask generator, and modifying generation of the filter mask dependent on the first resultant signal.

Advantageously, detecting source image content in a border portion of the image comprises detecting whether the picture element comprises skin tones and outputting a second resultant signal to the programmable mask generator, and modifying generation of the filter mask dependent on the second resultant signal.

According to a third aspect of the invention, there is provided a computer readable medium comprising computer executable software code, the code being for spatially filtering an image represented by a video signal comprising the steps of: inputting a picture element of the video signal; extracting a position of the picture element within the image; detecting source image content in a border portion of the image; generating a filter mask for spatially filtering picture elements of the image dependent on the position of the picture element within the image and on source image content in the border portion of the image; using the filter mask spatially to filter the image; and outputting a video signal representing the filtered image.

Other aspects and features of the present invention will become apparent to those ordinarily skilled in the art upon review of the following description of specific embodiments of the invention in conjunction with the accompanying Figures.

Embodiments of the present invention will now be described, by way of example only, with reference to the accompanying drawings, in which:

Figure 1 is a graphical representation of a graded filter profile applied across an image, plotting a degree of filtering as ordinates against a spatial dimension across the image as abscissa;

Figure 2a is a first exemplary image resulting from the profile of Figure 1 applied in two dimensions;

Figure 2b is a second exemplary image resulting from the profile of Figure 1 applied in two dimensions;

Figure 3 is a block diagram of a first embodiment of a spatial filtering system according to the invention;

Figure 4 is a block diagram of a second embodiment of a spatial filtering system according to the invention; and

Figure 5 is a flow chart of a method of spatially filtering an image according to the invention.

Throughout the description, identical reference numerals are used to identify like parts.

A degree to which images can be compressed is proportional to a complexity and level of detail in the image. By applying strong spatial filtering to a periphery of an image sequence, detail can be selectively removed to reduce a number of symbols required to represent that region, without adversely affecting the perceived overall image quality.

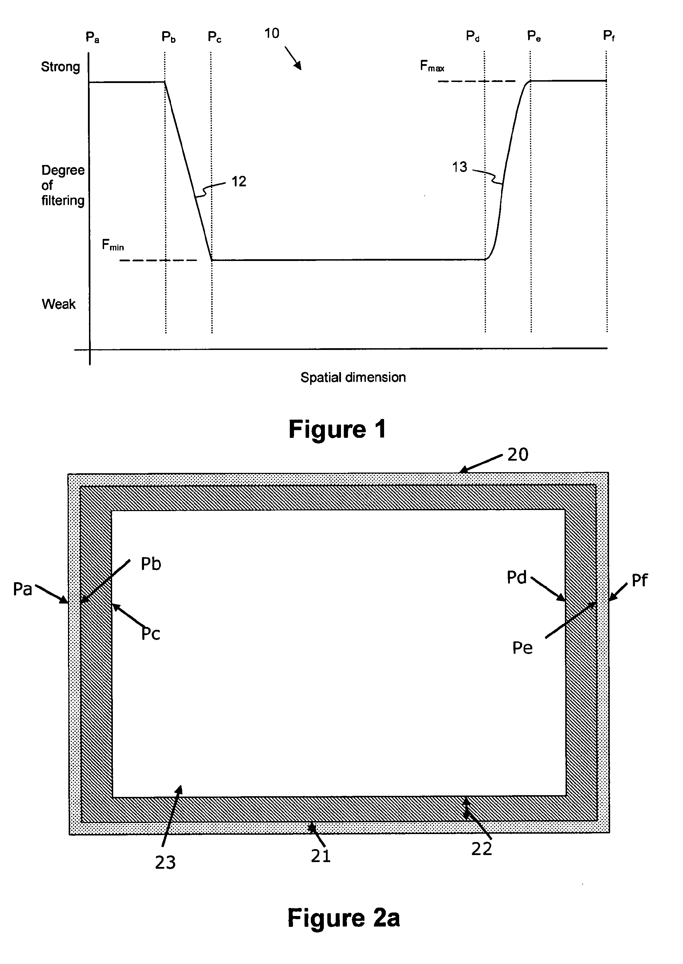

However, this filtering could lead to a noticeable boundary region where the image pre-processing would stand out as a softened halo around the central region. To obviate this effect a graded profile 10 is applied to the processing as illustrated in Figure 1.

In Figure 1, points $P_a$ and $P_f$ represent limits of the image either vertically or horizontally. $P_b$ and $P_e$ are inner limits of maximum processing up to which a degree of pre-processing is highest, $F_{max}$. These points are usually set to be equidistant from their respective limit points, $P_a$ and $P_f$, but are not necessarily so. More details in this respect are provided hereinafter in respect of embodiments of the invention.

Points $P_b$ and $P_e$ are not necessarily inside the outer limits, $P_a$ and $P_f$, as shown, but may be coincident with these points. In that situation, a non-linear profile of transition may be beneficial.

Points $P_c$ and $P_d$ bound a central portion of the image where border pre-processing falls to a minimum level $F_{min}$, which may, or may not; represent an unfiltered image, since some degree of spatial filtering across the whole image may be desirable.

Transition regions 12, 13 from $P_b$ to $P_c$ and from $P_d$ to $P_e$, respectively, show a progression from one degree of filtering to another. $P_b$ to $P_c$ shows a linear transition 12 that is generally chosen when a transition rate, defined by Equation 1 below, is less than an arbitrary threshold chosen to make the transition as unnoticeable as possible. Equation 1 is an expression of a rate of change of bandwidth reduction across a transition.

$$\nabla = \frac{F_{max} - F_{min}}{P_b - P_c} \qquad \textbf{Equation 1}$$

The transition 13 from $P_d$ to $P_e$ shows a non-linear transition from $F_{max}$ to $F_{min}$. This non-linear technique is chosen when the transition rate is high or would be particularly appropriate if either $P_b$ or $P_c$ were coincident with the outer limit points.

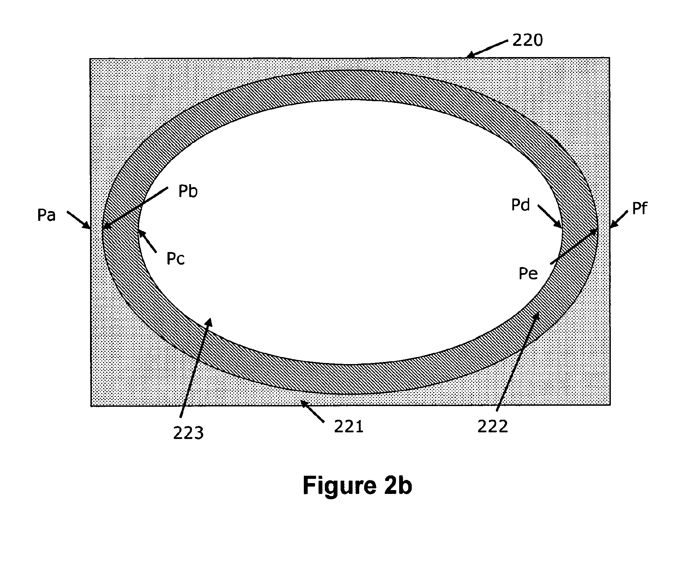

Figures 2a and 2b show exemplary images in a schematic manner of the degree of filtering applied across the image when the profile of Figure 1 is applied in two dimensions.

The degree of filtering is mapped to the luminance of each picture element or pel in the image such that high processing is represented by bright pels and low filtering by dark ones.

It can be seen schematically from Figures 2a and 2b that a highly filtered, border 21, 221 exists around the periphery and a lesser-filtered, region 23, 223 exists in the central section. In practice, moving inwards, the transition 22, 222 between the border portion and the central portion in some embodiments has a graduated decrease in intensity of filtering.

Further, since receptors of the HVS are distributed in a radial profile from the centre of the retina, further advantage is gained by rounding the edges of the mask as shown in Figure 2b. However, care must be exercised not to make the profile too rounded since active interest in the picture can move towards the diagonals which are highly filtered.

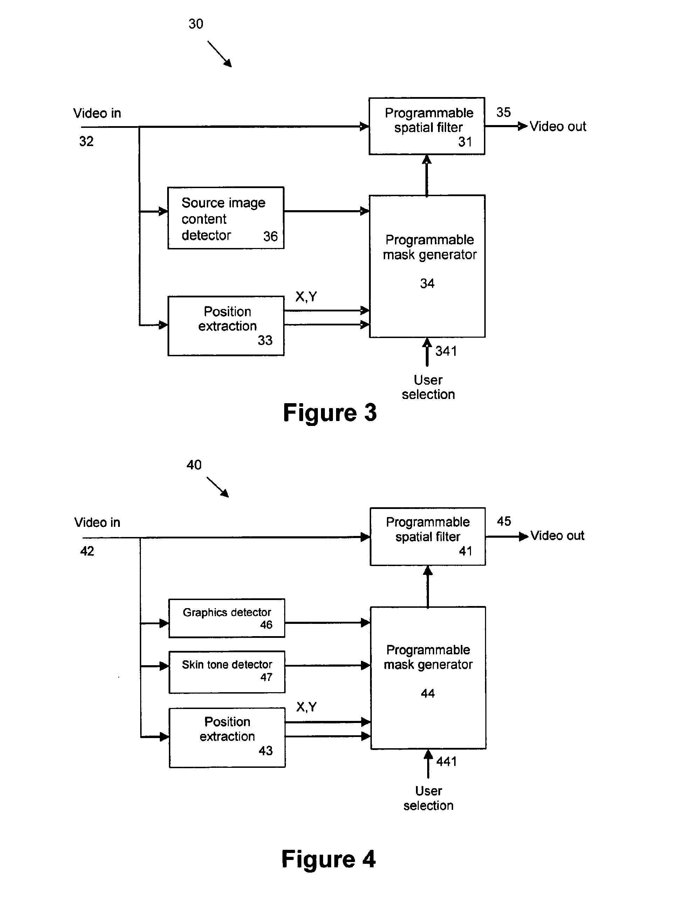

Figure 3 is a block diagram of a first embodiment of a pre-processing system 30 according to the invention. A programmable spatial filter 31 has a video input 32 which also acts as an input to a position extraction block 33 and a source image content detector 36. The position extraction block 33 has X and Y coordinate outputs to a programmable mask generator 34. The source image content detector 36 also has an output to the programmable mask generator 34. The programmable mask generator 34 has a user selection input 341 and an output to a control input of the programmable spatial filter 31. The programmable spatial filter 31 has a video output 35.

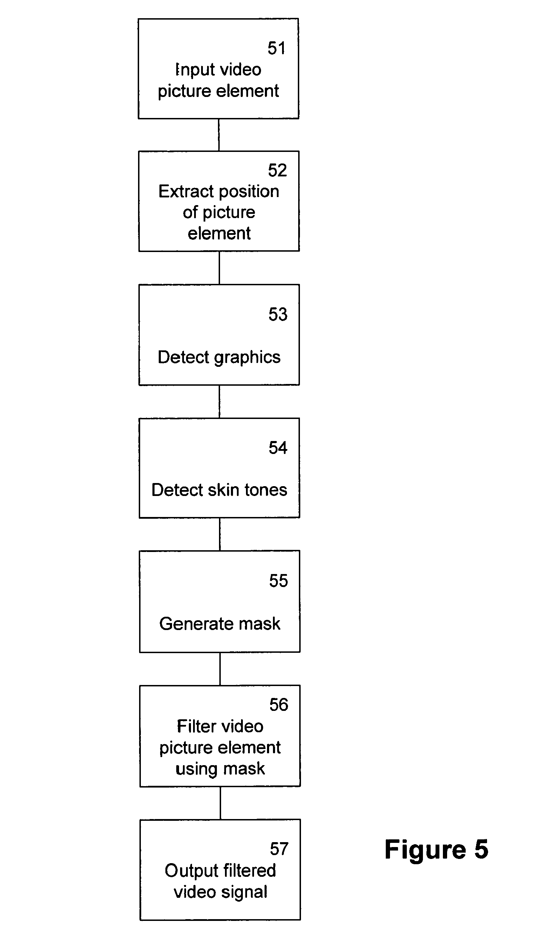

Referring to Figures 3 and 5, in use, an input image enters 51 at the video input 32. During the active picture, the horizontal and vertical position within the image is extracted 52 by the position extraction block 33 and the corresponding coordinates passed to the mask generator 34. The source image content detector detects source image content in a border and transition portion of the image 21, 22; 221,222. The mask generator 34 translates 55 the position within the image, the source image content and a user selection of the mask profile and shape input at the user selection input 341 into a degree of filtering. This value of a degree of filtering is input to the programmable spatial filter and used to control 56 the bandwidth of the image at that position in the image. Filtered video is output 57 from the system at video output 35.

A representative collection of pels around a pel under operation, referred to as a window, is usually required to perform spatial filtering. At a very edge of an image, there will not be such a set of pels available. In this case, an average of surrounding pels which are usefully available is selected and used to produce a softened and smoothed border.

Two situations require attention to obtain optimal performance from the programmable spatial filter system of the invention.

The first is that the HVS is particularly sensitive to variation of hue and resolution across human skin tones. A loss of resolution on points of a human face would be more noticeable than on other types of detail. This loss of resolution would compromise the overall perceived system performance. Therefore, in a second embodiment of the invention the source image content detector comprises a skin tone detector 47, as illustrated in Figure 4.

The skin tone detector overrides the mask generator 44 and can reduce the filtering towards, or to, $F_{min}$ where skin tone is detected in an image, and particularly in a border portion of the image. If $F_{min}$ is greater than 0 the filtering may be removed completely, as needed.

The second issue is that of overlaid computer graphics, tickers and captions. These often contain high detail and sharp transitions of intensity and chrominance and if filtered would be compromised. Thus, in a third embodiment of the invention, shown in Figure 4, the source image content detector comprises a graphics detector 46 to detect such graphics, tickers and captions.

Therefore, referring to Figure 4, an embodiment of a programmable spatial filter 41 according to the invention has a video input 42 which also acts as an input to a position extraction block 43, a graphics detector block 46 and a skin tone detector block 47. The position extraction block 43 has X and Y coordinate outputs to a programmable mask generator 44, and outputs of the graphics detector block 46 and skin tone detector block 47 also have respective inputs to the programmable mask generator 44. The programmable mask generator 44 has a user selection input 441 and an output to a control input of the programmable spatial filter 41. The programmable spatial filter 41 has a video output 45.

Referring to Figures 4 and 5, in use, an input image enters 51 at the video input 42. During the active picture, the horizontal and vertical position within the image is extracted 52 by the position extraction block 43 and the corresponding coordinates passed to the programmable mask generator 44. The graphics detector 46 determines 53 whether the portion of the image being processed represents graphics, tickers or captions and outputs a corresponding output to the programmable mask generator 44, to reduce a degree of filtering where said graphics, tickers or captions are detected. Similarly, the skin tone detector 47 determines 54 whether the portion of the image being processed represents skin tone and outputs a corresponding output to the programmable mask generator 44, to reduce a degree of spatial filtering where skin tone is detected. The mask generator 44 translates the position within the image and a user selection of the mask profile and shape input at the user selection input 441, together with the information on whether the portion of image represents graphics or skin tone to select 55 a value of a degree of filtering for generating a filter mask for the image. This value of a degree of filtering is input to the programmable spatial filter and used to control 56 the bandwidth of the image at that position in the image. Filtered video is output 57 from the system at video output 45.

It will be understood that the graphics detector and the skin tone detector can be used separately or in combination.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device.

## Claims

1. A programmable spatial filter system (30) for a video signal (32) comprising position extraction means (33) arranged to extract a position in an image of a picture element to be spatially filtered; source image content detector means (36); programmable mask generator means (34) arranged to receive output from the position extraction means (33) and from the source image content detector means (36) and to generate a filter mask dependent on the extracted position and on source image content in a border portion (21, 22) of the image; and programmable spatial filtering means (31) arranged to filter the image using the filter mask input from the programmable mask generator means (34).

2. A programmable spatial filter system as claimed in claim 1, wherein the programmable mask generation means (34) further comprises user selection means (341) arranged for a user to select a filter mask.

3. A programmable spatial filter system as claimed in claims 1 or 2, wherein the filter mask is arranged to filter the image to a greater extent in border portions (21) of an image than in a central portion (23) of the image.

4. A programmable spatial filter system as claimed in claim 3, wherein the filter mask is arranged to filter the image in a transition portion (22) between the border portion (21) and the central portion (23) of the image to an extent decreasing in a direction from the border portion to the central portion.

5. A programmable spatial filter system as claimed in claim 4, wherein a transition (13) in a degree of filtering from the border portions (21) to the central portion (23) is non-linear.

6. A programmable spatial filter system (40) as claimed in any of the preceding claims, wherein the source image content detector means comprises graphics detector means (46) arranged to detect whether the picture element comprises a graphics picture element and to output a first resultant signal to the programmable mask generator (44), wherein the programmable mask generator (44) is arranged to modify generation of the filter mask dependent on the first resultant signal.

7. A programmable spatial filter system (40) as claimed in any of the preceding claims, wherein the source image content detector means comprises skin tone detector means (47) arranged to detect whether the picture element comprises skin tones and to output a second resultant signal to the programmable mask generator (44), wherein the programmable mask generator is arranged to modify generation of the filter mask dependent on the second resultant signal.

8. A method of spatially filtering an image represented by a video signal (32) comprising the steps of:

   a. inputting (51) a picture element of the video signal (32);
   b. extracting (52) a position of the picture element within the image;
   c. detecting (53, 54) source image content in a border portion (21, 22) of the image;
   d. generating (55) a filter mask for spatially filtering picture elements of the image dependent on the position of the picture element within the image and on source image content in the border portion of the image;
   e. using the filter mask spatially to filter (56) the image; and
   f. outputting (57) a video signal representing the filtered image.

9. A method as claimed in claim 8, wherein generating a filter mask further comprises a user selecting a filter mask.

10. A method as claimed in claims 8 or 9, comprising filtering an image to a greater extent in border portions (21) of the image than in a central portion (23) of the image.

11. A method as claimed in claim 10, comprising filtering the image in a transition portion (22) between the border portions (21) and the central portion (23) of the image to an extent decreasing from the border portions to the central portion.

12. A method as claimed in claim 11, wherein a transition (13) in a degree of filtering from the border portions (21) to the central portion (23) is non-linear.

13. A method as claimed in any of claims 8 to 12, wherein detecting source image content in a border portion of the image comprises detecting (53) whether the picture element comprises a graphics picture element and outputting a first resultant signal to the programmable mask generator, and modifying generation of the filter mask dependent on the first resultant signal.

14. A method as claimed in any of claims 8 to 13, wherein detecting source image content in a border portion of the image comprises detecting (54) whether the picture element comprises skin tones and outputting a second resultant signal to the programmable mask generator, and modifying generation of the filter mask dependent on the second resultant signal.

15. A computer program product comprising program code means arranged to perform all the steps of the method as claimed in any of claims 8 to 14 when that program code means is run on a computer.

16. A computer-readable medium embodying a computer program product as claimed in claim 15.

Figure 1

Figure 2a

220

Pa

Pb

Pc

Pd

Pf

Pe

223

221

222

## Figure 2b

30

Video in
32

Programmable
spatial filter
31

35 → Video out

Source image
content
detector    36

Programmable
mask generator
34

Position
extraction
33

X,Y

341

User
selection

## Figure 3

40

Video in
42

Programmable
spatial filter
41

45 → Video out

Graphics detector
46

Skin tone detector
47

Programmable
mask generator
44

Position
extraction
43

X,Y

441

User
selection

## Figure 4

**51**
Input video
picture element

**52**
Extract position
of picture
element

**53**
Detect graphics

**54**
Detect skin tones

**55**
Generate mask

**56**
Filter video
picture element
using mask

**57**
Output filtered
video signal

**Figure 5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0609154 A